(19) Europäisches Patentamt
European Patent Office
Office européen des brevets

(11) EP 4 131 234 A1

(12) EUROPEAN PATENT APPLICATION

(43) Date of publication:
08.02.2023 Bulletin 2023/06

(21) Application number: 21189860.6

(22) Date of filing: 05.08.2021

(51) International Patent Classification (IPC):
G09G 3/32 (1980.01)          G09G 5/397 (2000.01)
H04N 21/2365 (2011.01)       H04N 5/92 (1980.01)
G09G 5/395 (2000.01)         H04N 5/222 (1985.01)

(52) Cooperative Patent Classification (CPC):
G09G 3/32; G06F 3/1423; G09G 5/395;
H04N 21/41415; G09G 2310/063;
G09G 2320/0247; G09G 2320/0257;
G09G 2360/123; G09G 2380/06; H04N 5/2224

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Appario Global Solutions (AGS) AG
6340 Baar (CH)

(72) Inventor: The designation of the inventor has not
yet been filed

(74) Representative: Reitstötter Kinzebach
Patentanwälte
Sternwartstrasse 4
81679 München (DE)

(54) METHOD AND SYSTEM FOR OPERATING AN ACTIVE DISPLAY

(57) The present invention concerns a method for operating an active display comprising an array of active light-emitting elements, wherein the method comprises the steps of:

providing a first sequence of image data ($F0_k$) intended to be seen by direct viewers;

providing at least one further sequence ($F1_k,C1_k;F2_k,C2_k;F3_k,C3_k$) of image data not intended to be seed by said direct viewers;

selecting a standard frame rate (SFR) at which said first and at least one further sequences of image data are presented on said active display;

presenting said first sequence of image data and said at least one further sequence of image data in a time-sliced multiplexed manner on said active display;

wherein the display is operated at a high display frame rate (HDFR) comprising nd HDFR image slots during a time interval $\Delta T = 1/SFR$ of said standard frame rate (SFR), each HDFR image slot having a duration $\tau_i$ with

$$\sum_{i=1}^{nd} \tau_i = \Delta T = 1/SFR$$

and wherein an image of said first sequence of image data ($F0_k$) and an image of said at least one further sequence of image data are distributed within said nd HDFR image slots in such a manner that luminance changes of said active display occur at frequencies greater than 100 Hz.

Fig. 4

**Description**

The present invention concerns a method and a system for operating an active display, especially a LED display, where more than one sequence of image data is shown on the active display in a time-sliced multiplexed manner.

In recent years, active displays such as light-emitting diode (LED) displays have found a variety of applications ranging from computer displays or television screens in the office or household environment where typically a single display or two or three separate displays are used, to large-scale applications in the advertisement or entertainment industries where multiple LED panels are essentially seamlessly joined together to create LED rows or LED walls. In the context of the present application, reference will predominantly be made to LED displays as typical examples of active displays but it will be evident that the technology described herein can be used for other types of active displays as well, especially active pixel-based displays such as active-matrix organic light-emitting diode (AMOLED) displays, plasma displays or quantum dot displays. Moreover, in the context of the present application, a row or column of LED-displays or LED-panels will refer to individual LED displays/panels joined together in one dimension (for instance, as a horizontal row or a vertical column), while LED wall refers to multiple LED panels joined together in two dimensions. Rather than showing the same image data/video content on each panel, suitable control equipment is usually used to distribute each image frame on the available number of LED panels so that the viewer gets the impression of a single display having huge dimensions. Moreover, in the context of the present invention, a sequence of image data shown on the active display will also be described as a "video stream". In general, the term "video stream" shall also refer to any type of image content shown on the LED displays, for instance to actual video streams of a sequence of image frames shown in succession or to still images, even monochromatic still images. In this sense, "video stream" also comprises the case where a single still image is only presented once, i.e. without having to alter image content or re-sent image content to the LED display at a certain frame rate.

LED or OLED (AMOLED) displays are a common display technology in a large variant of appliances ranging from TV or computer screens to media displays in vehicles and cell phones. LED displays in the form of walls, rows or columns are widely used as billboards or signboards to convey information or advertisements to the viewers. Moreover, LED walls recently became increasingly popular in the entertainment industry for providing background and illumination in virtual studio settings.

In the past, a single a dedicated sequence of image data (or single video stream) has been shown on an active display. However, in recent years, new technological developments required the insertion of additional image content in the sequence of image data where individual images (or frames) of different sequences of image data are interleaved with each other. In these cases only one sequence of image data (here denoted as the "first sequence of image data" is intended to be seen, in the sense of consciously recognized, by direct viewers while interleaved further sequences of image data are usually hidden from being seen or recognized by the direct viewers.

Typical examples include applications, where the active display is part of a scenery which is captured/filmed by a camera such as a video camera or a still photography camera.

One of these applications relates to virtual studios where walls made of LED displays, especially fine pitch displays, have replaced conventional green screen or blue screen background panels/screens. This allows the background scenery to be presented on the LED wall (i.e. as a first treatment of image data) while filming the foreground together with the background, which significantly reduces the amount of video post-production. As described in applicants European patent application EP21169258.7 it can be useful to present further sequences of image data on the LED displays interleaved with the first sequence of image data, for instance chromakey image data and/or tracking pattern image data for identifying the position and relative orientation of LED displays within the scenery and the camera capturing the scenery.

In other applications, it can be desired that the direct viewer can see features or information which should not be captured by cameras, for instance text prompting or any kind of locators that are not wanted in the recordings of the scenery by a camera.

Another application relates to so-called "virtual advertisement". At sports events, such as football matches, there are usually many LED displays installed in a stadium on which advertisement content is presented during the sports event. When videos of a sports event are broadcasted around the world, the specific advertisement content at the event will also be seen in the video. However, certain advertisements will only be relevant for audiences in certain locations and, more importantly, certain advertisements which are allowed in one country might even be prohibited by law in other countries. Virtual advertisement provides a solution to these problems by identifying the LED displays in the captured video and replace the actual content shown in the stadium by alternative content depending on the respective target audiences. To this effect, it is not only necessary to identify the location of the LED displays within the image, but also to identify the position and orientation of the camera with respect to the specific LED display. Therefore, similar problems as in video studios arise at sports events in the context of virtual advertisement as well, namely to allow identifying the location of the LED displays and the orientation of the camera, for instance by introducing additional image content such as chromakey images and tracking patterns.

As an alternative solution to virtual advertisement techniques described above, the present applicant has developed a method allowing different image content intended for different audiences to be shown on active displays, such as LED signboards, in a time-sliced multiplexed manner. Videos of the scenery are generated with one or more video cameras being synchronized to different sequences of image data shown on the active displays so that multiple videos of a scenery can be produced which are identical as far as the overall scenery is concerned but which show different image on the LED signboards. This technology is for instanced described in applicant's international patent application WO 2018/138366 A1.

The above-described technologies demonstrate that there are multiple applications where active displays such as LED panels are part of a scenery which is recorded by video cameras, TV cameras or even still photography cameras or mobile phone/tablet cameras, and where these active displays show different image content in a time-sliced multiplexed manner. In all these applications, there are not only cameras which record the scenery present but also human beings who are part of the scenery (in the following denoted as "persons" or "direct viewers"), for instance as an audience at a sports event or an entertainment event, or as actors or studio personnel in a movie studio and who are therefore watching the scenery including any active display present in the scenery. When these active displays are operated in a manner in which different sequences of image data are presented in a time-sliced multiplexed manner, only one of these sequences of images is typically intended to be seen or recognized by persons present in or close to the scenery. In US patent application US 2009/102957 A, it has been suggested that the further sequences of image data are presented only for such are small portion of the time interval of a recording frame rate that the relevant image content cannot be seen or recognized by persons. In applicant's WO 2018/138366 A1, this concept has been developed further by suggesting that the further sequences of image data are presented as sequences of images and corresponding inverse/complementary images.

However, when two or more unrelated sequences of image data are interleaved with each other, several problems can occur. Even very short introductions of additional image data can lead to noticeable flickering of the active display even if the image data themselves cannot be recognized. Moreover, as the human eye integrates over within the temporal resolution of the eye (typically in the range of 40 ms), introduction of additional image data will lead to a noticeable increase in the black-level of the first sequence of image data seen or recognized by direct viewers, particularly in darker areas of the images.

Therefore, it is an object of the present invention to provide a method and a system for presenting different sequences of image data in a time-sliced multiplexed manner on one or more active displays which are part of a scenery in such a manner persons present within or close to the scenery have an improved viewing experience of the first sequence of image data intended to be seen by them, especially in terms of minimizing flickering and avoiding noticeable increase of black levels, while still allowing recording of the scenery in synchronization with one or more of the sequences of image data under a broad range of environmental lighting conditions. Moreover, in state of the art video or movie studios, a control system is employed that allows to level all light sources through one controller. There is a need to synchronize all those light sources to avoid flicker, pulsation, off colors effects, etc.

This technical problem is solved by the method defined in present claim 1. Further embodiments of the present invention are subject to the dependent claims.

Accordingly, the present invention relates to a method for operating an active display comprising an array of active light-emitting elements, said method comprising the steps of:

providing a first sequence of image data ($F0_k$) intended to be seen by direct viewers;
providing at least one further sequence of image data ($F1_k,C1_k;F2_k,C2_k;F3_k,C3_k$) not intended to be seen by said direct viewers;
selecting a standard frame rate (SFR) at which said first and at least one further sequences of image data are presented on said active display;
presenting said first sequence of image data and said at least one further sequence of image data in a time-sliced multiplexed manner on said active display;
wherein the display is operated at a high display frame rate (HDFR) comprising nd HDFR image slots during a time interval $\Delta T = 1/SFR$ of said standard frame rate (SFR), each HDFR image slot having a duration $\tau_i$ with

$$\sum_{i=1}^{nd} \tau_i = \Delta T = \frac{1}{SFR}$$

and wherein an image of said first sequence of image data ($F0_k$) and an image of said at least one further sequence of image data ($F1_k,C1_k;F2_k,C2_k;F3_k,C3_k$) are distributed within said *nd* HDFR slots such that, irrespective of said standard frame rate *SFR,* luminance changes of said active display occur at frequencies greater than 100 Hz, preferably greater than 120 Hz and particularly preferred greater than 200 Hz.

According to the present invention, an "active display" is an array of elements, capable of emitting light, such as an LED, an AMOLED array, an array of plasma cells or an array of quantum dots. The term "light" in the sense of the present invention denotes electromagnetic radiation commonly described using the term "light", in particular visible light having a wavelength range from 400 to 700 nm but also infrared light at longer wavelengths and ultraviolet light at shorter wavelengths.

A "sequence of image data" $Fx_k$ in the sense of the present invention is a sequence $x$ $(x=1,2,3,..)$ of two-dimensional image information which is transmitted to or stored in the active display where one element $k$ of the sequence of image data typically represents one individual image shown on the active display and where subsequent images ($k+1, k+2, ...$)of a given sequence of image data are presented in subsequent standard frame rate time intervals $\Delta T = 1/SFR$ on the physical display. Within a standard frame rate time interval $\Delta T$ a given image of each sequence of image data can be presented one or more times. Each individual sequence of image data typically represents a video stream shown on the active display where image content from one image of the sequence to the subsequent image of the sequence can vary. Image content from one image to the subsequent image can, however, also remain unchanged, for instance if no movement is depicted in the video stream. In other embodiments, a sequence of image data can also contain still images which are shown over several standard frame rate time intervals $\Delta T$. In other embodiments, a sequence of image data may even contain only a single type of image which does not vary throughout the sequence of image data at all, for instance a monochromatic image or a tracking pattern image.

The term "direct viewers" in the sense of the present invention denotes human beings present at the venue/scenery at which the active display is operated at which are capable of directly viewing the active display.

The term "intended to be seen by said direct viewers" means that the first sequence of image data $F0_k$ is presented in such a manner that the direct viewers are capable of viewing/recognizing the sequence of image data, for instance in the form of a still image or a sequence of still images or as part of a video when the sequence of image data is presented in a way at which individual images cannot be temporally resolved. The first sequence of image data $F0_k$ is therefore also denoted "venue feed)".

The term "intended not to be seen by the direct viewers" describes a presentation of a further sequence of image data $F1_k,C1_k;F2_k,C2_k;F3_k,C3_k$ where, although light emanating from the active display in correspondence with images of said sequence of image data can reach the eyes of a direct viewer, the image data are presented in such a manner that the corresponding images cannot be seen/recognized by the human eye. This does not only refer to a temporal resolution in terms of video presentation but more broadly refers to the fact that the image data are presented in such a manner that neither individual images nor a sequence of images can be seen or recognized. The further sequences of image data $F1_k,F2_k, F3_k,$ are denoted "parallel feeds".

The term "luminance" denotes is a photometric measure of the luminous intensity per unit area of the active display as measured in candela per square meter ($cd/m^2$), also known as "nit". In contrast "brightness" denotes the subjective impression of the objective luminance but is therefore closely related to the luminance.

Due to repeatedly presenting images of the first sequence of image and at least second sequence of image data in an alternating fashion on the physical display, direct viewers of the physical display are prone to notice a flickering of the display. According to the present invention, flickering is minimized by ensuring that the at least two interleaved time-sliced multiplexed sequences of image data avoid luminance changes of the active display at frequencies of 100 Hz or less, assuming that the first sequence of image data and the at least one further sequence of image data are independent from each other (it is noted that with at least two sequences of image data it would always be possible to artificially set up a scheme presenting luminance chances of less than 100 Hz but with these schemes, the at least two sequences of image data would not be considered as being independent from each other).

Thus, in typical applications of the present invention, a change from one image of the first sequence of image data to an image of the at least one further sequence of image data will result in luminance changes. The same is true if more than one further sequence of image data is employed when an image of one of the further sequences of image data is followed by an image of another of the further sequences of image data. Consequently, the present invention suggests that the sequences of image data are shown one or more times in one or more slots of the *nd*HDFR slots in such a manner that any change from an image of one sequence of image data to an image of a further sequence of image data occurs at a frequency higher than 100 Hz, preferably higher than 120 Hz. In the physiology of the human eye, it is known that the critical fusion frequency (i.e. the minimum frequency at which flickering vanishes) is proportional to the logarithm of the light intensity (Ferry-Porter Law). In the context of the present invention, applicant found that the flickering experience depends on the brightness of both, the content intended to be seen by the direct viewers (first sequence of image data) but also the "hidden content" (further sequences of image data) which, although captured by the human eye, is not intended to be seen/recognized by the direct viewers. The present applicant found that at frequencies of or higher than 100 Hz no flickering is perceived by the human eye of the direct viewers. However, in dark light conditions and/or when displaying darker content, lower frequencies are commonly accepted by the human eye as well without introducing flickering.

In order to "hide" effectively, the at least one additional sequence of image data from being recognized or perceived by the direct viewers, it is preferred that the time-integrated luminance of which an image of the first sequence of image data is presented during a standard frame rate time interval $\Delta T = 1/SFR$ is higher than the time-integrated luminance of the image of the at least one further sequence of image data presented during that time interval. If more than one further sequence of image data is presented, the time-integrated luminance of the first sequence of image data intended for the direct viewers is preferably higher than the sum of the time-integrated luminance of all further sequences of image data which are not intended to be seen by the direct viewers. Preferably, the time-integrated luminance of the first sequence of image data is higher by a factor of 2 or more, more preferably by a factor of 4 or more.

In order to decrease the impact of the further sequences of image data on the first sequence of image data even more, it is preferred that the at least one further sequence of image data comprises at least a second sequence of image data image data ($F1_k;F2_k;F3_k$) and at least a second complementary sequence of image data ($C1_k;C2_k;C3_k$) consisting of inverse or complementary image data to said second sequence of image data. Accordingly, each image $F1_k$ of the second sequence of image data is interleaved with its inverse/complementary image $C1_k$ within the same standard frame rate time interval $\Delta T = 1/SFR$. The introduction of inverse images in order to reduce flickering of the active display for the direct viewers has already been described in detail in applicant's international patent application WO 2018/138366 A1. In certain embodiments the further sequences of image data include pairs of sequences of image data and inverse/complementary images, the time-integrated luminance at which an image of the first sequence of image data can be presented during a standard frame rate time interval $\Delta T=1/SFR$ is lower than the time-integrated luminance of the image of the at least one further sequence of image data presented during that time interval. The first sequence of image data can still be seen/recognized by direct viewers, albeit with generally noticeably raised grey levels resulting from the combination of images and inverse images of the further sequences of image data. For instance, the first sequence of image data may only be presented for a fraction, e.g. for half or a third of the standard frame rate time interval.

According to a preferred embodiment of the present invention, each pair ($F1_k,C1_k;F2_k,C2_k;F3_k,C3_k$) of images of said at second sequence of image data ($F1_k;F2_k;F3_k$) and inverse/complementary images of said second complementary sequence of image data ($C1_k;C2_k;C3_k$) are presented within a time interval of 3.3 ms or less. Flickering and motion blur of the active display for the direct viewers can particularly effectively be minimized if corresponding images and complementary/inverse images are presented within said 3.3 ms time interval. In many applications of the concept of the present invention, the second sequence of image data contains images which are intended to be captured by appropriately synchronized video cameras (c.f. WO 2018/138366 A1). In order to allow capturing of a bright image, the time duration at which the images of the second sequence of image data is presented, is preferably as long as possible. In order to meet the constraint of 3.3 ms, the complementary image can also be presented in time slots immediately before and after the HDFR time slot of the second sequence of image data.

In certain embodiments of the present invention, every further sequence of image data is provided with the corresponding complementary sequence of image data.

The further sequences of image data can contain various images or video streams. For instance, the further sequences of image data can contain alternative advertisement content which is a captured by an appropriately synchronized video camera. Typically, the video camera is synchronized to only capture the images ($F1_k;F2_k;F3_k$) while the images corresponding inverse/complementary images ($C1_k;C2_k;C3_k$) are not recorded.

In one embodiment, each of the $nd$ HDFR slots has the same duration $\tau$ where

$$\tau = \frac{\Delta T}{nd} = \frac{1}{nd \cdot SFR}$$

In another embodiment, the $nd$ HDFR slots of a standard frame rate time interval $\Delta T = 1/SFR$ are independent from each other and can therefore have variable durations $\tau_i$, as long as the sum of the durations $\tau_i$ of the $nd$ HDFR slots corresponds to the duration of a standard frame rate time interval 1/SFR, i.e.

$$\sum_{i=1}^{nd} \tau_i = \Delta T = \frac{1}{SFR}$$

In a preferred practical implementation of the method of the invention, each presentation of images during an HDFR image slot consists of one or more underlying pulse width modulation frames (PWM-frames, also denoted as "scrambles") during which no new image data is presented but the brightness of the image presented during a HDFR slot is controlled by operating the individual active elements, for instance LED elements, of the active display in accordance with a pulse width modulation scheme.

Preferably, the durations $\tau_i$, $\tau$ of each of said $nd$HDFR slots are generated via a pulse counter fed by a G-clock (GCLK). Accordingly, rather than employing conventional LED drivers which receive an external PWM-signal via an OE (output enable) pin of the driver, the present invention preferably uses active displays which are provided with LED control circuits (LED drivers) which generate PWM-frames (scrambles) from an internally generated G-clock (GCLK) signal which is fed to a pulse counter of the circuit. The actual luminance of an LED is controlled by the PWM-duty cycle, i.e. the ratio at which an LED is in "on"-mode versus "off"-mode during each PWM-time interval. In addition or alternatively to pulse width modulation, the brightness of a HDFR image slot can also be controlled via the current at which an individual active element such as an LED element is operated. By controlling PWM-frames via a G-clock, it is not only possible to generate HDFR slots of equal durations but also HDFR slots of variable durations as will be described in more detail below. The PWM signal controls LED color gradation and luminance. An external PWM signal will suffer distortion and decay in long-range transmission resulting in color and luminance changes. In contrast, using an internally generated G-clock and PWM signal for determining the duration of the HDFR slots and luminance results in high accuracy of the corresponding image frames.

This is particularly useful when pairs of images and complementary/inverse images having different duration in the above referenced variable duration scheme are concerned. In a preferred embodiment of the present invention, different durations $\tau_i$ of the HDFR image slots can be obtained by changing the frequency of the G-clock while counting the same predetermined number of pulses via the pulse counter. Thus, the method of the present invention ensures that both images combine to a precise homogeneous gray image.

When synchronizing cameras capturing a scenery which includes one or more active displays, either a leading or a trailing edge of a HDFR slot can be used as a trigger point and the variable length can be adjusted to the right or to the left of the trigger point.

When video cameras are used which are intended to capture one of the further sequences of image data, usually a synchronization procedure between camera and display has to be conducted to ensure that only the desired HDFR image slot is captured without, e.g. capturing parts of adjacent image slots where, for instance, complementary/inverse images are shown. A preferred procedure involves setting the camera at a much shorter shutter time than required for the actual video shooting so that only a part of the HDFR image slot is captured. Although the captured video will be rather dark in view of the shorter shutter time, it will be more sensitive to interference with adjacent HDFR image slots so that proper synchronization can quickly be achieved. Then, the desired shutter speed is selected according to lighting conditions and video shooting can commence.

In one embodiment of the present invention, at least one of said $nd$HDFR image slots comprises a black phase. The term "black phase" denotes a time interval at which the physical display is a dark, for instance, in case of a LED display, all LEDs are turned off. This can be accomplished by turning off the G-clock (CLK) during the duration of the black phase. The black phase can have a duration of a typical HDFR image slot, preferably however the black phase has a duration of up to 50% of a HDFR image slot. More preferably, the black phase has a duration which is substantially shorter than the duration $\tau_i$ of the respective HDFR image slot. The term "substantially shorter" means that the duration of the black phase is shorter than 20%, preferably shorter than 10%, and particularly preferred shorter than 5% of the duration of the respective $nd$HDFR image slot. Typically, when standard frame time intervals of, for instance, 20 ms (50 Hz) or 16.7 ms (60 Hz) are employed, the HDFR image slots have a duration in the millisecond range and the inserted black phases have a duration in the range of 0.1 ms. The insertion of a black phases is particularly preferred in the initial part of HDFR image slots associated with further sequences of image data ($F1_k;F2_k;F3_k$) which are intended to be captured by video cameras. Accordingly, the active display is black during transient oscillations of the amplifiers of the control circuits of the active display (during the settling time of the components of the control circuits), thus allowing the video camera to capture are clean image already exhibiting the desired color and luminescent values. A black phase can also be inserted in the initial phase of images of the first sequence of image data ($F0_k$) but in this case minor deviations in color and luminance are less important because, typically, there are no inverse/complementary images for images of the first sequence of image data.

Flicker of the active display can further be reduced, if at least six HDFR image slots are provided during a standard frame rate time interval $\Delta T = 1/SFR$. Preferred numbers of slots during a standard frame rate time interval $\Delta T$ are 12, 24 or 36 HDFR slots.

As indicated above, the further sequences of image data ($F1_k,C1_k;F2_k,C2_k;F3_k,C3_k$) shown during a standard frame rate time interval $\Delta T = 1/SFR$ tend to increase the black level of the images of the first sequence of image data ($F0_k$) intended to be seen by the direct viewers. This increase implied level constitutes a particular problem in a bright environment, for instance at outdoor sports events with sun shining directly on a LED advertisement signboard. Under such conditions, the luminance of the further sequences of image data intended to be captured by a video camera, i.e. sequences of image data $F1_k;F2_k;F3_k$, has to be increased thus aggravating the problem of black level increase in the first sequence of image data. Consequently direct viewers present at the event will perceive the first sequence of image data as a video feed with some sort of grayish overlay. In order to minimize the black level increase in the first sequence of image data, the present invention suggests that HDFR image slots presenting images of the at least second complementary sequence of image data $C1_k;C2_k;C3_k$ also comprise image data of said first sequence of image data ($F0_k$). This allows to increase the ratio of images from the first sequence of image data to images from the further sequences of image data, thus improving the viewing experience of the direct viewers. Similarly, the recordings of unsynchronized a camera as capturing more than one HDFR image slot, for instance a whole standard frame rate time interval, is improved and essentially corresponds to the viewing experience of the direct viewers.

Active displays are usually operated at certain luminance, for instance at 8 bit (256 brightness levels), 9 bit (512 brightness levels), 10 bit (1024 brightness levels), 12 bit or even up to 16 or 24 bit. When the images of the further sequence of image data $F1_k;F2_k;F3_k$ have to be presented at a high luminance, for instance a due to a bright environment, the corresponding complementary sequence of image data $C1_k;C2_k;C3_k$ as to be presented a high luminance as well in order for the combined images $F1_k,C1_k;F2_k,C2_k;F3_k,C3_k$ to form a homogeneous gray sum image. Often, the complementary image data are presented during shorter HDFR image slots then the corresponding further sequence of image data $F1_k;F2_k;F3_k$, thus requiring even higher luminance of the complementary sequence of image data. Thus, it might be difficult to include additional image data from the first sequence of image data without saturating the corresponding HDFR image slot. Therefore, in a preferred embodiment of the present invention, it is suggested that the active light-emitting elements of said active display are operated at an increased electrical current while the complementary image component is proportionally reduced. In certain embodiments, the driver chips for the active elements (e.g. LEDs or OLEDs) can reduce the nominal current (i.e. the value for 100% electrical current) of active light-emitting elements, for instance via adjustable resistors, so that the LEDs can safely be operated even at 100 - 200% of its nominal current.

Usually, active elements such as LEDs have a nonlinear power-current relationship. Accordingly, when current adjustments are made according to the present invention, corrections for this nonlinear behavior have to be applied in order to ensure that no color changes are effected which could otherwise effect the image intended for the direct viewers directly (first sequence of image data) or indirectly by insufficient canceling of the images and inverse/complementary images of further sequences of image data. The respective power current relationship is usually provided by the manufacturer of the active elements and can therefore be implemented in the hardware for controlling the display. Typically, using two (linear approximation), three or four data points and interpolating/extrapolating over the operating range will yield satisfactory results.

In another embodiment, the image slots presenting images of the at least second complementary sequence of image data ($C1_k;C2_k;C3_k$) comprise image components of the immediately preceding and the immediately following HDFR image slot.

Preferably, the display used in the method of the present invention is a LED or OLED (AMOLED) display.

The present invention also concerns a system for operating an active display comprising an array of active light-emitting elements, wherein said system comprises a control unit configured to perform the above describe method.

The present invention will now be described in more detail in connection with the attached drawings.

In the drawings:

Fig. 1   is a schematic representation of a studio environment, where the method of the present invention can be practiced;

Fig. 2   is a schematic representation of a sports stadium, where the method of the present invention can be practiced;

Fig. 3   is a schematic representation of a frame sequence where individual slots have a variable length;

Fig. 4   is a frame sequence similar to the sequence of Fig. 3 with black phase insertion;

Fig. 5   is a frame sequence showing with increased proportion of a first sequence of image data; and

Fig. 6   is an alternative embodiment of the scheme of Fig. 5.

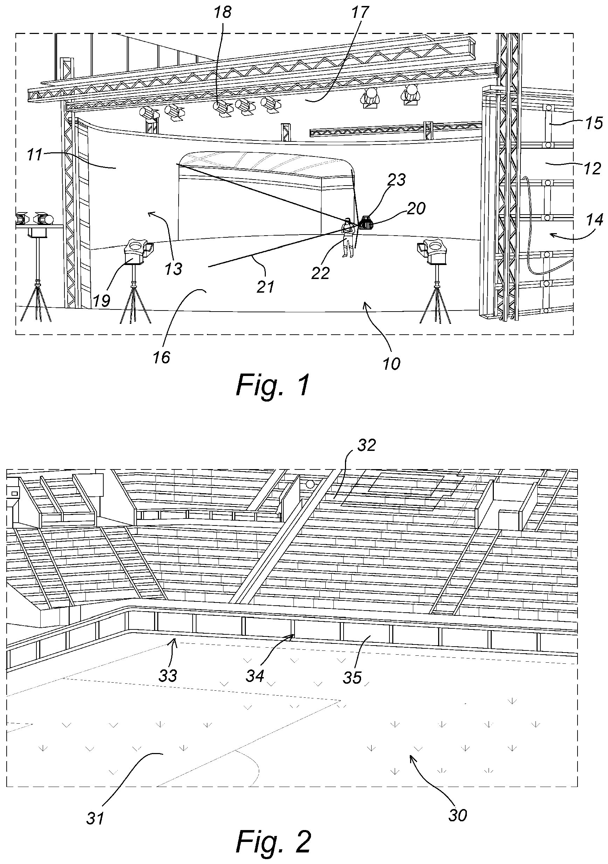

Fig. 1 shows a schematic representation of a digital video studio 10, which comprises an LED background wall 11, made from numerous individual LED panels 12. The LED wall 11 is an essentially seamless wall, when viewed from the front side 13, but, as can be seen from the partially visible backside 14 of wall 11, consists of individuals panels 12 fixed on suitable mounting structures 15. The studio 10 further includes an LED floor 16, also made from individual LED panels, as well as an LED ceiling 17, which is also made from individual LED panels. The studio 10 further includes conventional lighting equipment such as top lights 18 and floor lights 19, and one or more digital cameras schematically represented by a camera 20 in Fig. 1. Fig. 1 also denotes the field of view of camera 20 indicated by frustum 21. An actor 22 is shown in front of a camera 20 within the frustum of the camera's field of view. Attached to camera 22 is an auxiliary camera 23 directed in the example of Fig. 1 towards the LED sealing, where tracking patterns can be presented, which will be captured by auxiliary camera 23 attached to main camera 20, from which position and orientation of camera 20 can be derived.

Fig. 2 shows a sports stadium - in the case of Fig. 2 a soccer stadium 30 - having a soccer field 31 and a stand structure 32 surrounding the soccer field 31. At the circumference 33 of soccer field 31, an LED row 34 consisting of individual LED panels 35 is provided to show advertisement. In a method of the present invention, advertisement to be seen by the viewers present in the stadium can be presented as a first sequence of image data, while chromakey images can be presented as a second sequence of image data. In order to reduce disturbance of the live viewers present in the stadium, the present invention provides a third sequence of image data, which consists of image frames representing complementary/inversed images of the chromakey images of the second sequence of image data. In one embodiment, the first sequence of image data can also include tracking patterns, while the third sequence of image data can include complimentary images of said tracking patterns.

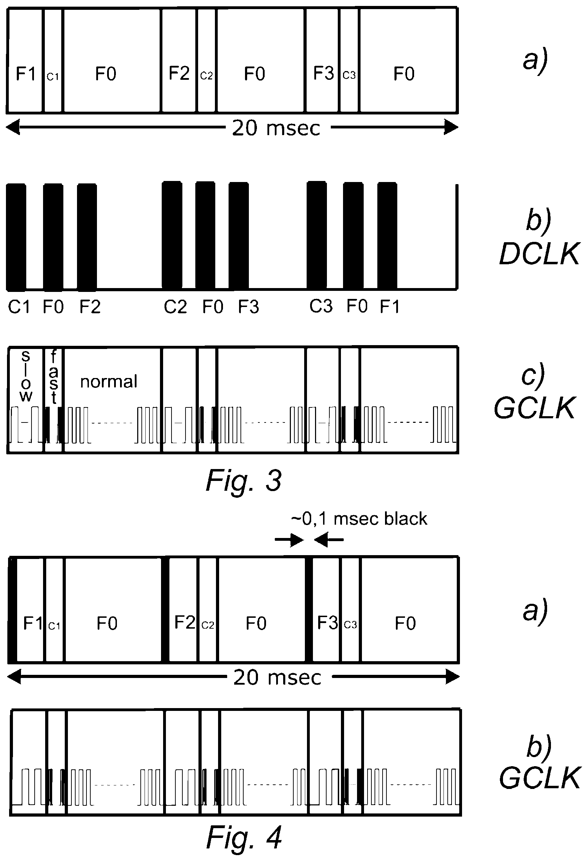

In the following, the method of the present invention is explained in more detail with reference to a typical sequence of HDFR image slots. In the examples presented, it is assumed that the standard frame rate corresponds to 50 Hz and consequently, the standard frame rate time interval $\Delta T = 1/SFR$ corresponds to 20 ms. Only one standard frame rate time interval $k$ is shown in Fig. 3 to 5 but it is understood that corresponding time intervals $k-1$, $k-2$, ... extend to the left of the depicted time interval and corresponding time intervals $k+1$, $k+2$, ... extend to the right of the depicted time intervals. Moreover, in many applications, the number of HDFR image slots will be larger than the number of image slots depicted in the present examples for the sake of simplicity.

The concept of having HDFR image slots of variable length will now be described in more detail. The minimum duration of an image slot equals the minimum transmission time plus Vsync signal. The GCLK Frequency should be varied to show full images within the give time. Assuming to have a maximum of 12 image slots:
F1 is shown with gain $G_{F1}$ = 0.5 for $t_{F1}$ = 2 ms. C1 is then shown for the minimal time of $t_{C1}$ = 1.67ms and a gain of

$$G_{C1} = \frac{t_{F1}}{t_{C1}} * G_{F1} = \frac{2ms}{1{,}67ms} * 0.5 = 0.6$$

Fig. 3 shows a schematic representation of a frame sequence where individual slots have a variable duration. Fig. 3a) shows an actual sequence of 9 HDFR image slots where a major proportion of the frame time interval is attributed to the first sequence of image data F0 intended to be seen by the direct viewers. Three further sequences of image data F1, F2, F3 are provided, each with its complementary/inverse sequence of image data C1, C2, C3. Fig. 3b) shows the data clock (DCLK) sequence which governs at the transmission of image data. As can be taken therefrom, during presentation of a slot, for instance F1, image data of the following slot C1 are transmitted to the active display, and so on. The image data comprise the luminance values for each LED of the active display. As an example, a LED display having a resolution of 10 bit (1024 luminance levels) comprises an LED which, according to the data clock information shall be operated at 50% of its maximum intensity. Thus, the brightness information (range 0-1023) transferred corresponds to a value of 511. Fig. 3c) shows how this value transferred into are suitable pulse width modulation PWM. A G-clock (CLK) is generated, for instance at a normal frequency of 10 MHz. In a simple embodiment, a pulse counter counts the number of pulses until the desired value for this image slot (in this example 511) is reached. During the remainder of the pulses of the G-clock, the PWM signal is turned off. Accordingly, PWM signal is operated at a duty cycle of 50%. In a preferred embodiment, however, the active pulses are distributed evenly throughout the time interval of a slot.

Fig. 4 shows a frame sequence similar to the sequence of Fig. 3 with black phase insertion. As can be taken from Fig. 4 a) black phases having a duration of 0.1 ms are inserted in the initial portion of each of the first sequences of image data F1, F2, F3. As can be taken from Fig. 4b), the black phases are generated by switching the G-clock off during the desired black phases.

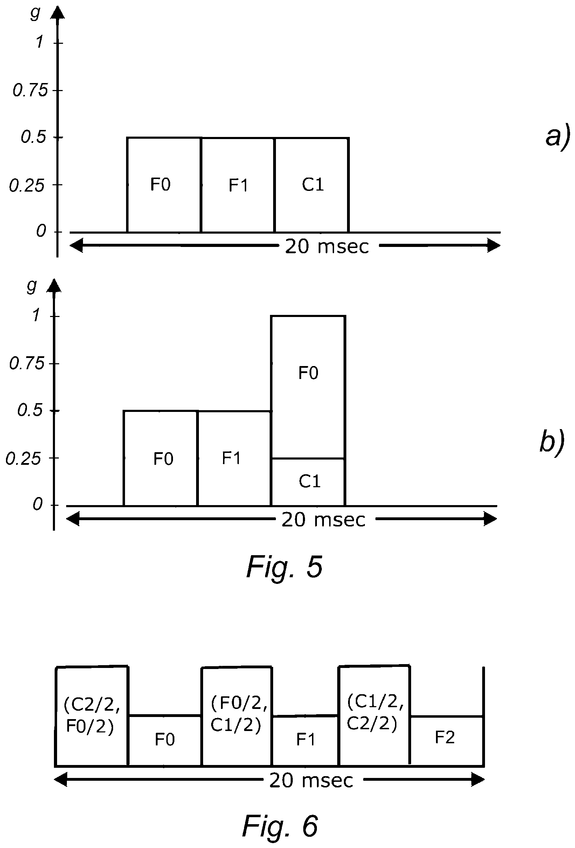

The concept of increasing the brightness of the venue feed i.e. the first sequence of image data *F0* intended to be seen by the direct viewers will now be described in more detail: The inverse image is displayed at a higher current, but therefore with reduced luminance level. That way, there is headroom in the color/luminance space left and the content for the human eye of the direct viewers can be added to the image. Fig. 5 shows an example of this concept, assuming a PWM controlled brightness range of 10 bit, i.e. from 0 (black) to 1023 (maximum) intensity. The image gain factor is the proportion of the PWM controlled image brightness within that range, i.e. gain=0 corresponds to 0 bit and gain = 1 corresponds to 1023. The actual luminance of an active light-emitting element (e.g. a LED) of the active display is given by the gain factor time the electrical current at which the element is operated times the gain factor. In a basic embodiment of the method of the present invention shown in Fig. 5a) *F1* is displayed with gain 0.5 (i.e. at 511 bit PWM level) and current 0.2 and the complementary/inverse image C1 is displayed with the same gain and current so that the sum of F1 and C1 results in a featureless grey image. In the embodiment shown in Fig. 5b) F1 is also displayed with gain 0.5 and current 0.2 but *C1* is displayed with gain 0.25 and current 0.4 so that the sum of F1 and C1 still results in a featureless grey image but the venue feed F0 for the direct viewers can still be added with gain 0.75 so that the overall proportion of the venue feed is increased. It has, however to be born in mind that the current-intensity relation of R, G and B LEDs varies. Thus, a color correction needs to be performed. It needs to be ensured the luminance level, at which the image content is complemented remains constant. No matter which current setting is chosen for the inverse image slot. Here it is helpful to keep in mind the amount of light (essentially the number of photons) is proportional to the luminance/brightness level B and gain G, with the current $c(c \in [0,2]$, as the factor is given by the driver chip current setting) and the time $t$ the image is displayed:

$$n_{ph} \sim G * B * c * t$$

Fig. 6 shows an extension to the scheme of Fig. 5 where two inverse images immediately preceding and flowing a given further sequence of image data F0 (venue feed), F1 (first parallel feed), F2 (second parallel feed) plus additional image content of the venue feed are combined in one HDFR image slot to provide a frame sequence having an increased proportion of first sequence of image data F0. This allows for more flexibility and capability, especially in a low slot system like the LED floor system "Black Marble" commercialized by ROE Visual.

Further, this approach of HDFR image slots with variable duration can be combined with the concept of increasing the luminance of the first sequence of image data (venue feed): Accordingly, the gain of the inverse image can be calculated by:

$$G_{C1} = \frac{t_{F1} * c_{F1}}{t_{C1} * c_{C1}} * G_{F1} = \frac{2ms * 0.2}{1{,}67ms * 0.4} * 0.5 = 0.3$$

With the currents taken from the example before. Hence, $0.7 * F0$ can be added to the color corrected inverse image. Under certain circumstances some driver chips can be modified by pretending to have more scanlines, but that technique has several disadvantages. However, the minimum display time would be decoupled from the transmission time.

## Claims

1. Method for operating an active display comprising an array of active light-emitting elements, said method comprising the steps of:

   providing a first sequence of image data ($F0_k$) intended to be seen by direct viewers;
   providing at least one further sequence ($F1_k,C1_k;F2_k,C2_k;F3_k,C3_k$) of image data not intended to be seen by said direct viewers;
   selecting a standard frame rate (SFR) at which said first and at least one further sequences of image data are presented on said active display;
   presenting said first sequence of image data and said at least one further sequence of image data in a time-sliced multiplexed manner on said active display;
   wherein the display is operated at a high display frame rate (HDFR) comprising $nd$ HDFR image slots during a time interval $\Delta T = 1/SFR$ of said standard frame rate (SFR), each HDFR image slot having a duration $\tau_i$ with

$$\sum_{i=1}^{nd} \tau_i = \Delta T = 1/SFR$$

   and wherein an image of said first sequence of image data ($F0_k$) and an image of said at least one further sequence of image data are distributed within said $nd$ HDFR image slots in such a manner that luminance changes of said active display occur at frequencies greater than 100 Hz.

2. The method of claim 1, wherein said at least one further sequence of image data comprises at least a second sequence of image data image data ($F1_k;F2_k;F3_k$) and at least a second complementary sequence of image data ($C1_k;C2_k;C3_k$) consisting of inverse/complementary image data to said second sequence of image data.

3. The method of claim 2, wherein each pair $(F1_k,C1_k;F2_k,C2_k;F3_k,C3_k)$ of images of said at second sequence of image data $(F1_k;F2_k;F3_k)$ and inverse/complementary images of said second complementary sequence of image data $(C1_k;C2_k;C3_k)$ are presented within a time interval of 3.3 ms or less.

4. The method of one of claims 1 to 3, wherein said *nd* HDFR slots of a standard frame rate time interval $\Delta T$ have the same length $\tau$.

5. The method of one of claims 1 to 3, wherein said nd HDFR slots of a standard frame rate time interval $\Delta T$ have variable lengths $\tau$.

6. The method of one of claims 4 to 5, wherein the lengths $\tau_i$, $\tau$ of each of said *nd* HDFR slots are generated via a pulse counter fed by a G-clock (GCLK).

7. The method of claim 6, wherein different durations $\tau_i$ of said HDFR image slots are be obtained by changing the frequency of the G-clock (GCLK) while counting the same predetermined number of pulses via said pulse counter.

8. The method of one of claims 1 to 7, wherein at least one of said *nd* HDFR image slots comprises a black phase having a duration which is substantially shorter than the duration $\tau_i$ of the respective HDFR image slot.

9. The method of claim 8, wherein the duration of the black phase is shorter than 20% of the duration of said nd HDFR image slot.

10. The method of one of claims 1 to 9, wherein at least six HDFR image slots are provided during a standard frame rate time interval $\Delta T = 1/SFR$.

11. The method of one of claims 2 to 10, wherein HDFR image slots presenting images of said at least second complementary sequence of image data $(C1_k;C2_k;C3_k)$ also comprise image data of said first sequence of image data $(F0_k)$.

12. The method of claim 11, wherein said active light-emitting elements of said active display are operated at an increased electrical current while the complementary image component is proportionally reduced.

13. The method of one of claims 11 to 12, wherein said HDFR image slots presenting images of said at least second complementary sequence of image data $(C1_k;C2_k;C3_k)$ comprise image components of the immediately preceding and immediately the following HDFR image slot.

14. The method of one of claims 1 to 13, wherein said active display is a LED or OLED display.

15. System for operating an active display comprising an array of active light-emitting elements, said system comprising a control unit configured to perform the method of one of claims 1 to 14.

**Fig. 1**

**Fig. 2**

*Fig. 3*

*Fig. 4*

Fig. 5

Fig. 6

**EP 4 131 234 A1**

Europäisches
Patentamt
European
Patent Office
Office européen
des brevets

# EUROPEAN SEARCH REPORT

Application Number

EP 21 18 9860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 574 651 A1 (APPARIO GLOBAL SOLUTIONS AGS AG [CH]) 4 December 2019 (2019-12-04) * paragraphs [0001], [0012], [0016], [0053], [0063] – [0095]; figures 1,8-11 * | 1-3,8,9, 11-13,15 | INV. G09G3/32 G09G5/397 H04N21/2365 H04N5/92 G09G5/395 H04N5/222 |
| X,D | US 2009/102957 A1 (PHELAN ANDREW PETER [GB]) 23 April 2009 (2009-04-23) | 1,15 | |
| A | * paragraphs [0005], [0008], [0014]; figure 1 * | 8,9 | |
| X | WO 2020/253249 A1 (SHENZHEN AOTO ELECTRONICS CO [CN]) 24 December 2020 (2020-12-24) | 1-3,15 | |
| A | * paragraphs [0005] – [0016], [0081] – [0090]; figure 6 * | 8,9 | |
| A | US 2020/388211 A1 (ZHANG YI [US] ET AL) 10 December 2020 (2020-12-10) * paragraph [0025]; figures 1-5,7 * | 8,9 | |
| A | US 2008/068359 A1 (YOSHIDA YASUNORI [JP] ET AL) 20 March 2008 (2008-03-20) * paragraph [0885]; figures 35A, 35B * | 8,9 | TECHNICAL FIELDS SEARCHED (IPC) G09G H04N |

The present search report has been drawn up for all claims

| Place of search | Date of completion of the search | Examiner |
|---|---|---|
| The Hague | 10 March 2022 | Pichon, Jean-Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 21 18 9860

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

**1-3, 8, 9, 11-13, 15**

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

**Application Number**

EP 21 18 9860

The Search Division considers that the present European patent application does not comply with the requirements of unity of invention and relates to several inventions or groups of inventions, namely:

```
1. claims: 1-3, 11-13, 15

        a second complementary sequence of image data consisting of
        inverse/complementary image data
                    ---


2. claims: 4-7

        the length of the HDFR slots
                    ---


3. claims: 8, 9

        at least one of said nd HDFR image slots comprising a black
        phase
                    ---


4. claim: 10

        at least six HDFR time slots in a standard frame period
                    ---


5. claim: 14

        a LED or OLED display
                    ---
```

EP 4 131 234 A1

## ANNEX TO THE EUROPEAN SEARCH REPORT
## ON EUROPEAN PATENT APPLICATION NO.

EP 21 18 9860

10-03-2022

| Patent document cited in search report | | Publication date | Patent family member(s) | | Publication date |
|---|---|---|---|---|---|
| EP 3574651 | A1 | 04-12-2019 | AU | 2018211533 A1 | 25-07-2019 |
| | | | CA | 3049732 A1 | 02-08-2018 |
| | | | CN | 110226329 A | 10-09-2019 |
| | | | EP | 3574651 A1 | 04-12-2019 |
| | | | EP | 3574652 A1 | 04-12-2019 |
| | | | JP | 6921966 B2 | 18-08-2021 |
| | | | JP | 2020505869 A | 20-02-2020 |
| | | | US | 2019364309 A1 | 28-11-2019 |
| | | | US | 2019394504 A1 | 26-12-2019 |
| | | | WO | 2018138366 A1 | 02-08-2018 |
| | | | WO | 2018138367 A1 | 02-08-2018 |
| US 2009102957 | A1 | 23-04-2009 | AU | 2007245421 A1 | 08-11-2007 |
| | | | BR | PI0710357 A2 | 09-08-2011 |
| | | | CA | 2650690 A1 | 08-11-2007 |
| | | | CN | 101480038 A | 08-07-2009 |
| | | | EP | 2014085 A1 | 14-01-2009 |
| | | | GB | 2437575 A | 31-10-2007 |
| | | | JP | 2009534977 A | 24-09-2009 |
| | | | KR | 20090007463 A | 16-01-2009 |
| | | | RU | 2008143452 A | 10-06-2010 |
| | | | US | 2009102957 A1 | 23-04-2009 |
| | | | WO | 2007125350 A1 | 08-11-2007 |
| | | | ZA | 200810045 B | 30-12-2009 |
| WO 2020253249 | A1 | 24-12-2020 | CN | 110225265 A | 10-09-2019 |
| | | | WO | 2020253249 A1 | 24-12-2020 |
| US 2020388211 | A1 | 10-12-2020 | CN | 113223448 A | 06-08-2021 |
| | | | US | 2020388211 A1 | 10-12-2020 |
| US 2008068359 | A1 | 20-03-2008 | CN | 101145327 A | 19-03-2008 |
| | | | CN | 103137093 A | 05-06-2013 |
| | | | JP | 5227502 B2 | 03-07-2013 |
| | | | JP | 2008070838 A | 27-03-2008 |
| | | | KR | 20080025311 A | 20-03-2008 |
| | | | TW | 200820210 A | 01-05-2008 |
| | | | TW | 201415451 A | 16-04-2014 |
| | | | US | 2008068359 A1 | 20-03-2008 |
| | | | US | 2015130857 A1 | 14-05-2015 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21169258
- WO 2018138366 A1
- US 2009102957 A